# EUROPÄISCHE PATENTSCHRIFT

(11) **EP 0 913 285 B1**
(45) Veröffentlichungstag und Bekanntmachung des Hinweises auf die Patenterteilung: **22.01.2003**
(21) Anmeldenummer: 98115888.4
(22) Anmeldetag: 22.08.1998
(51) Int. Cl.: B60J 5/12, B60J 5/06

(54) **Schiebetüranschlageinrichtung**
Abutment device for sliding door
Dispositif de butée pour porte glissante

(30) Priorität: 30.10.1997 DE 19747938
(43) Veröffentlichungstag der Anmeldung: 06.05.1999
(73) Patentinhaber: DaimlerChrysler AG, 70567 Stuttgart (DE)
(72) Erfinder: Gauss, Joachim, 70180 Stuttgart (DE); Rapp, Helmut, 73095 Albershausen (DE)

(56) Entgegenhaltungen:
- EP-A- 0 531 179
- EP-A- 0 720 926
- DE-A- 19 528 891
- PATENT ABSTRACTS OF JAPAN vol. 008, no. 096 (M-294), 4. Mai 1984 (1984-05-04) & JP 59 011918 A (NISSAN JIDOSHA KK;OTHERS: 01), 21. Januar 1984 (1984-01-21)

## Beschreibung

Die Erfindung betrifft eine Schiebetüranschlageinrichtung für ein Fahrzeug mit den Merkmalen des Oberbegriffes des Anspruches 1. Eine solche Schiebetüranschlageinrichtung ist aus dem Dokument DE 195 28 891 A1 bekannt.

Eine derartige Schiebetürangschlageinrichtung wird insbesondere dazu verwendet, um eine Kollision zwischen einer geöffneten Tankklappe mit einer auf derselben Fahrzeugseite angeordneten Kraftfahrzeug -Schiebetür zu verhindern.

Eine immer größer werdende Anzahl von Fahrzeugen ist mit Schiebetüren zum Ein- und Aussteigen von Personen oder zum Ein- und Ausladen von Gegenständen versehen. Eine Schiebetüre benötigt im Vergleich mit einer üblichen, mit Scharnieren angelenkten Tür außberhalb des Fahrzeuges weniger Freiraum, so daß auch bei einem geringen Seitenabstand des Fahrzeuges gegenüber einem Hindernis die Schiebetür maximal geöffnet werden kann. Zum anderen kann mit einer Schiebetür ein erheblich größerer Fahrzeugzugang realisiert werden.

Eine derartige Kraftfahrzeug-Schiebetür ist üblicherweise mit zwei oder drei Rollensätzen versehen, die innerhalb entsprechender, in Längsrichtung des Fahrzeuges ausgerichteter Schienen geführt sind. Beispielsweise ist eine obere Schiene oberhalb der Schiebetür-Öffnung, eine mittlere Schiene im Bereich der Seitenwand des Fahrzeuges und eine untere Schiene unterhalb der Schiebetür-Öffnung angeordnet. Wenn die Tür entriegelt und in Längsrichtung des Fahrzeuges entlang den Schienen bewegt wird, führen die Schienen die Türe zunächst über die Fahrzeug-Außenseite nach außen und dann in Längsrichtung des Fahrzeuges neben dessen Seitenwand.

Wenn bei einem mit einer Schiebetür ausgestatteten Fahrzeug die Schiebetür und eine Tankklappe auf derselben Fahrzeugseite angeordnet sind, kann der Fall eintreten, daß die beispielsweise beim Betanken geöffnete Tankklappe in den Verstellweg der Schiebetüre hineinragt. Wenn dann die Schiebetür geöffnet wird, kann es zu einer Kollision zwischen der Schiebetür und der geöffneten Tankklappe kommen. Im Falle einer derartigen Kollision wird regelmäßig die Tankklappe und/oder die Fahrzeugtür beschädigt. Außerdem besteht beim Abnehmen und Aufsetzen des Tankdeckels eine Verletzungsgefahr. Zudem kann beim Tanken die Zapfpistole aus dem Einfüllstutzen herausgeschleudert werden, so daß Kraftstoff unkontrolliert in die Umgebung ausströmen kann. Um diese Gefahren zu verhindern, werden Schiebetüranschlageinrichtungen der eingangs genannten Art benötigt.

Aus der DE 195 28 891 A1 ist eine solche Schiebetüranschlageinrichtung bekannt, bei der eine quer zu ihrer Längsachse schwenkbar gelagerte Stange in das Innere einer Schiene schwenkbar ist, um eine Bewegung der Schiebetüre entlang dieser Schiene zu blockieren. Um die Stange zwischen einer ersten Stellung, in der die Türbewegung blockiert ist, und einer zweiten Stellung, in der die Blockierung aufgehoben ist, zu verschwenken, ist an der Schwenkachse der Stange ein Hebel befestigt, der über einen Seilzug mit der Tankklappe gekoppelt ist. Beim Öffnen der Tankklappe übt diese eine Zugkraft auf das Seil aus, die von diesem auf den Hebel übertragen wird und somit eine Schwenkverstellung der Stange bewirkt. Die in ihrer ersten Stellung in die Schiene hineinragende Stange wirkt unter Ausbildung eines Anschlages mit einer in der Schiene geführten Rolle eines Rollensatzes der Schiebetüre zusammen.

Die vorliegende Erfindung beschäftigt sich mit dem Problem für eine Schiebetüranschlageinrichtung der eingangs genannten Art eine zweckmäßige Ausgestaltung anzugeben, die mit technisch einfachen Mitteln und preiswert herstellbar ist.

Dieses Problem wird erfindungsgemäß mit einer Schiebetüranschlageinrichtung mit den Merkmalen des Anspruches 1 gelöst.

Die Erfindung beruht auf dem allgemeinen Gedanken, als Arretierungsmittel einen Anschlagbolzen vorzusehen, der durch einfache Axialverstellungen zwischen einer ersten und einer zweiten Stellung verstellbar ist. In seiner ersten Stellung, wenn die Tankklappe geöffnet ist, ragt ein axiales Ende des Anschlagbolzens in der Nähe einer der Türschienen in den Verstellweg der Schiebetüre bzw. eines Bestandteiles der Schiebetür hinein und begrenzt dadurch die Verstellbewegung der Schiebetüre entlang der Schiene. Die erfindungsgemäße Schiebetüranschlageinrichtung besteht somit im wesentlichen aus dem Anschlagbolzen und aus dem an der Tankklappen angeordneten Antriebsteil; sie ist demnach im höchsten Maße einfach aufgebaut und preiswert herstellbar.

Eine bevorzugte Ausführungsform der erfindungsgemäßen Schiebetüranschlageinrichtung weist die Merkmale des Anspruches 2 auf. Ein Trag- und Führungselement weist eine höhere Stabilität als die Schiebetüre selbst auf und ist bezüglich einer Zusammenwirkung mit dem Anschlagbolzen robuster und gegenüber Beschädigungen unempfindlicher. Außerdem kann der Anschlagbolzen dadurch außerhalb des Blickfeldes - z.B. durch eine Blende verdeckt - im Bereich einer die Schiene enthaltenden Mulde in der Seitenwand des Fahrzeuges untergebracht sein.

Bei einer bevorzugten Ausführungsform mit den Merkmalen des Anspruches 3 wird das Öffnen der Schiebetüre bereits am Anfang der Öffnungsbewegung verhindert. In diesem Anfangsstadium der Öffnungsbewegung weist die Schiebetür keine oder nur eine relativ geringe kinetische Energie auf, so daß der aktivierte Anschlag nur geringfügigen mechanischen Beanspruchungen ausgesetzt ist und keine Beschädigungen am Anschlagbolzen oder an der Türe bzw. an dem entsprechenden Türbestandteil stattfinden können. Dies kann z.B. bei einer Schiebetüranschlageinrichtung der Fall sein, bei der sich trotz aktiviertem Anschlag die Schiebetüre, insbesondere schwungvoll, entlang eines bestimmten Anteiles des Öffnungsweges verstellen läßt.

Eine besonders preisgünstige Variante der erfindunggemäßen Schiebetüranschlageinrichtung weist die Merkmale des Anspruches 4 auf. Eine derartige Ausgestaltung erfordert insbesondere nur geringfügige Änderungen im Aufbau der Seitenwand des Fahrzeuges.

Um Beschädigungen der als Anschlag miteinander zusammenwirkenden Teile, nämlich dem Anschlagbolzen und der Schiebetüre bzw. des entsprechenden Bestandteiles der Schiebetüre zu verhindern, weist eine bevorzugte Ausführungsform der erfindungsgemäßen Schiebetüranschlageinrichtung die Merkmale des Anspruches 5 auf.

Als Antrieb für den Anschlagbolzen kann entsprechend einer Weiterbildung gemäß Anspruch 6 ein Antriebsteil vorgesehen sein, das an der Innenseite der Tankklappe angeordnet ist und eine Kulissenführung aufweist, die mit einem axialen Ende des Anschlagbolzens zu dessen Axialverstellung zusammenwirkt. Beim Aufklappen der Tankklappe wird das daran befestigte Antriebsteil mit um die Schwenkachse der Tankklappe verschwenkt, derart, daß die Kulisse quer zur Längsrichtung des Anschlagbolzens an dessen axialem Ende vorbei bewegt wird. Durch eine entsprechende Ausgestaltung der Kulisse - die Abmessungen der Kulisse in Achsrichtung des Anschlagbolzens sind quer zu dieser Achsrichtung ab- bzw. zunehmend - wird durch die Schwenkverstellung der Kulisse eine Axialverstellung des Anschlagbolzens bewirkt.

Mit Hilfe der Merkmale des Anspruches 7 wird erreicht, daß die komplette Schiebetüranschlageinrichtung in die Seitenwand des Fahrzeuges integriert und somit bei geschlossener Tankklappe von außen im wesentlichen nicht sichtbar ist und dementsprechend die Optik des Fahrzeuges nicht verändert.

Um die axiale Führung des Anschlagbolzens zu verbessern, kann eine Weiterbildung der erfindungsgemäßen Schiebetüranschlageinrichtung die Merkmale des Anspruches 8 aufweisen.

Bei einer besonders zweckmäßigen und einfachen Ausführungsform der erfindungsgemäßen Schiebetüranschlageinrichtung kann die Kulisse des Antriebsteiles entsprechend Anspruch 9 direkt mit einer axialen Stirnfläche des Anschlagbolzens zusammenwirken.

Um die beim Öffnen der Tankklappe vorliegende Schwenkbewegung der Tankklappe in eine in Achsrichtung des Anschlagbolzens verlaufende Antriebsbewegung umzusetzen, kann das Antriebsteil der erfindungsgemäßen Schiebetüranschlageinrichtung mit den Merkmalen des Anspruches 10 ausgestattet sein.

Wenn der Anschlagbolzen mit einer oberhalb der Tankklappe in der Seitenwand des Fahrzeuges verlaufenden Schiene zusammenwirkt, wird dieser zur Erreichung seiner ersten Stellung beim Öffnen der Tankklappe axial nach oben verstellt. Dabei kann der Anschlagbolzen z.B. mit Hilfe von Gleit- und Führungsmitteln derart gelagert sein, daß dieser beim Schließen der Tankklappe aufgrund der Schwerkraft selbsttätig von der ersten Stellung in seine zweite Stellung nach unten zurückgleiten kann. Zur Verbesserung der Rückstelleigenschaft kann entsprechend Anspruch 11 eine Art Nut-Feder-Führung vorgesehen sein, die eine Zwangsrückstellung beim Schließen der Tankklappe bewirkt.

Bei einer vorteilhaften Ausgestaltung mit den Merkmalen des Anspruches 12 können zwei Endstellungen für die Tankklappe definiert werden, in denen Axialkräfte des Anschlagbolzens keine Schwenkbewegung der Tankklappe bewirken können. Auf diese Weise kann ein selbsttätiges Schließen der Tankklappe durch große Rückstellkräfte des Anschlagbolzens verhindert werden.

Entsprechend Anbspruch 13 kann der Anschlagbolzen aus zwei stabförmigen Anschlagelementen gebildet sein, die mit Hilfe eines Bowdenzuges miteinander verbunden sind. Auf diese Weise können Längsbewegungen, die z.B. von der Kulisse auf das eine Anschlagelement übertragen wurden, durch den Bowdenzug auf das andere, den eigentlichen Anschlag bewirkende Anschlagelement übertragen werden. Somit kann die erfindungsgemäße Schiebetüranschlageinrichtung bei nahezu beliebigen Einbaugeometrien realisiert werden.

Eine andere Ausführungsform der erfindungsgemäßen Schiebetüranschlageinrichtung schlägt entsprechend Anspruch 14 für die Ausgestaltung der Antriebsmittel eine alternative Lösung vor. Dabei wirkt der Antriebsstab im wesentlichen als Druck- und Zug-Stange. Vorzugsweise erreicht der Winkel zwischen Antriebsstab und Anschlagbolzen in der ersten Stellung mindestens 180°, so daß eine Sicherung der Tankklappe in dieser Position erfolgt.

Um die Sicherheit, mit der die Rückstellung in die zweite Stellung des Anschlagbolzens erfolgt, zu verbessern, kann eine bevorzugte Ausführungsform eine Rückstellfeder entsprechend Anspruch 15 aufweisen.

Zweckmäßigerweise kann eine mit der Rückstellfeder versehene Ausführungsform zusätzlich mit den Merkmalen des Anspruches 16 ausgestattet sein, wodurch eine effektive Rückstellung des Anschlagbolzens in dessen zweite Stellung gewährleistet wird.

Bei einer anderen Ausgestaltungsform der erfindungsgemäßen Schiebetüranschlageinrichtung wird mit den Merkmalen des Anspruches 17 eine alternative Lösung für die Antriebsmittel vorgeschlagen. Dabei kann der Antriebsbolzen beispielsweise radial abstehende Zapfen aufweisen, die in ein Gewinde der Gewindeführung eingreifen und eine Axialverstellung des Anschlagbolzens bewirken, wenn sich dieser dreht.

Vorzugsweise ist die Antriebswelle gemäß Anspruch 18 biegsam ausgestaltet, so daß die Lage des Anschlagbolzens bzw. die Lage der Begrenzung für die Bewegung der Schiebetür unabhängig von Lage und Ausrichtung der Tankklappe bzw. deren Schwenkachse gewählt werden kann.

Weitere wichtige Merkmale und Vorteile der Erfindung ergeben sich aus den Unteransprüchen, den Zeichnungen und aus der nachfolgenden Figurenbeschreibung eines bevorzugten Ausführungsbeispieles anhand der Zeichnungen. Es zeigen, jeweils schematisch,
- Fig. 1: eine Seitenansicht auf die Einbaulage der erfindungsgemäßen Schiebetüranschlageinrichtung in einem im übrigen nicht dargestellten Kraftfahrzeug,
- Fig. 2: eine Detailansicht auf ein Antriebsteil der erfindungsgemäßen Schiebetüranschlageinrichtung,
- Fig. 3: wie Fig. 2, jedoch mit einer anderen Ausführungsform des Antriebsteiles,
- Fig. 4a und 4b: Detailansichten einer speziellen Ausführung des Antriebsteiles,
- Fig. 5a und 5b: Prinzipskizzen einer alternativen Ausgestaltung der Antriebsmittel,
- Fig. 6: eine Prinzipskizze einer weiteren alternativen Ausführungsform der Antriebsmittel, und
- Fig. 7: eine Prinzipskizze einer alternativen Ausgestaltungsform des Anschlagbolzens.

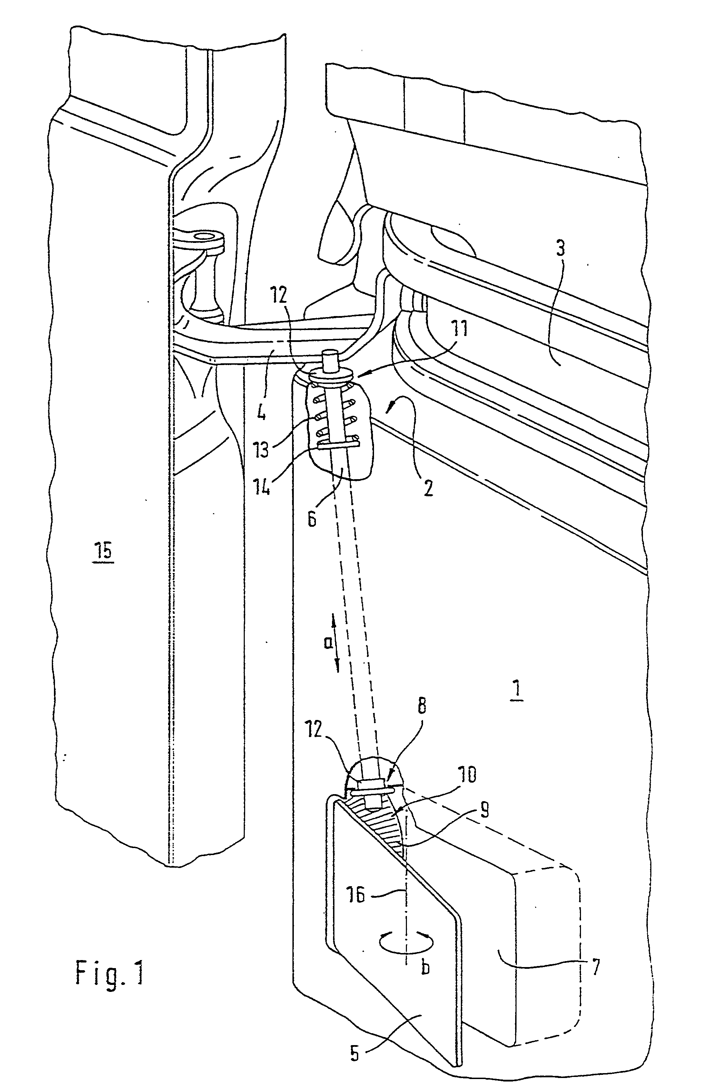

Entsprechend Fig. 1 weist eine Seitenwand 1 eines im übrigen nicht dargestellten Kraftfahrzeuges eine Mulde 2 auf, in der eine Schiene 3 für die Schiebeverstellung einer Schiebetüre 15 untergebracht ist. In der Schiene 3 ist ein Trag- und Führungselement 4 geführt verstellbar, an dem die Schiebetüre 15 befestigt ist. Die in Fig. 1 dargestellte Schiene 3 ist vorzugsweise die mittlere von drei Schiebetür-Führungsschienen, die beispielsweise unterhalb einer Fensterscheibe in der Seitenwand 1 des Fahrzeuges angeordnet ist.

Um eine Verstellbewegung der Schiebetüre zumindest soweit zu begrenzen, daß eine Kollision der Schiebetüre 15 mit einer geöffneten Tankklappe 5 nicht stattfinden kann, ist in der Seitenwand 1 ein Anschlagbolzen 6 untergebracht. Die Anordnung des Anschlags im Bereich der mittleren Schiene 3 wird bevorzugt, da die Bewegungsbegrenzung dann etwa auf Höhe des Schwerpunktes der Schiebtüre 15 erfolgen kann und somit ein Kippen der Schiebetüre 15 verhindert werden kann.

Der üblicherweise verdeckt hinter dem Außenblech der Seitenwand 1 des Fahrzeuges verlaufende Anschlagbolzen 6 mündet an einem axialen Ende, entsprechend Fig. 1 an seinem unteren, in einer von der Tankklappe 5 verschließbaren Tankmulde 7, deren Wandung eine vom axialen Ende des Anschlagbolzens 6 durchdrungene erste Öffnung 8 aufweist.

Auf der Innenseite der Tankklappe 5 ist in der Nähe von der Schwenkachse 16 der Tankklappe 5 ein Antriebsteil 9 befestigt oder einstückig mit diesem hergestellt, das auf seiner dem aus der Öffnung 8 in die Tankmulde 7 hineinragenden axialen Ende des Anschlagbolzens 6 zugewandten Oberseite eine Kulisse 10 aufweist. In der dargestellten bevorzugten Ausführungsform kommt eine insbesondere abgerundet ausgebildete Stirnfläche des Anschlagbolzens 6 direkt auf der Kulisse 10 zur Anlage.

Das entsprechend Fig. 1 obere, dem Antriebsteil 9 abgewandte axiale Ende des Anschlagbolzens 6 durchdringt die Seitenwand 1 im Bereich der Schienenmulde 2, in der zu diesem Zweck eine zweite Öffnung 11 vorgesehen ist. Die zwei Öffnungen 8 und 11 ergeben eine axiale Führung des Anschlagbolzens 6, der dadurch lediglich in seiner Axialrichtung entsprechend dem Doppelpfeil a sowie um seine Längsachse rotierend verstellbar ist.

Die zweite Öffnung 11 ist im Bereich der Schienenmulde 2 derart plaziert, daß sich das in entsprechendem Maße aus der zweiten Öffnung 11 hinausragende axiale Ende des Anschlagbolzens 6 im Verstellweg des Trag- und Führungselementes 4 befindet, wodurch dieses und somit die daran befestigte Schiebetüre 15 lediglich bis zum Kontakt mit dem Anschlagbolzen 6 verstellbar ist. Der aus dem Trag- und Führungselement 4 und dem aus der zweiten Öffnung 11 herausragende Endbereich des Anschlagbolzens 6 gebildete Anschlag ist dabei so gewählt, daß eine Kollision zwischen der Schiebetür 15 und der geöffneten Tankklappe 5 wirksam verhindert wird. Eine Beschädigung der Tankklappe 5 oder der Türe 15 sowie eine Verletzungsgefahr beim Tanken sind somit ausgeschlossen.

Im gezeigten Ausführungsbeispiel wird die Axialführung des Anschlagbolzens 6 und dessen axiale Verstellbarkeit mit Hilfe von Buchsen 12 verbessert, die in die Öffnungen 8 und 11 eingesetzt sind und in denen der Anschlagbolzen 6 gleitend verstellbar ist. Um das Eindringen von Flüssigkeit sowie von Gasen, wie Diesel- oder Benzindämpfen, entlang des Anschlagbolzens 6 in den Innenraum der Fahrzeug-Seitenwand 1 zu verhindern, können zumindest im Bereich der zweiten Öffnung 11 Dichtmittel wie O-Dichtringe oder Dichtlippen z.B. an der Buchse 12 vorgesehen sein.

Zur Unterstützung der Rückstellung des Anschlagbolzens 6 aus dem Verstellweg des Trag- und Führungselementes 4 ist innerhalb der Seitenwand 1 eine Rückstellfeder 13 vorgesehen, die koaxial zum Anschlagbolzen 6 angeordnet ist. Die als Schraubendruckfeder ausgebildete Rückstellfeder 13 stützt sich dabei zwischen einem am Anschlagbolzen 6 befestigten, davon radial nach außen abstehenden, scheibenförmigen Kragen 14 und dem Randbereich der zweiten Öffnung 11 ab. Die Rückstellfeder 13 bewirkt eine Vorspannung des Anschlagbolzens 6 gegen die Kulisse 10.

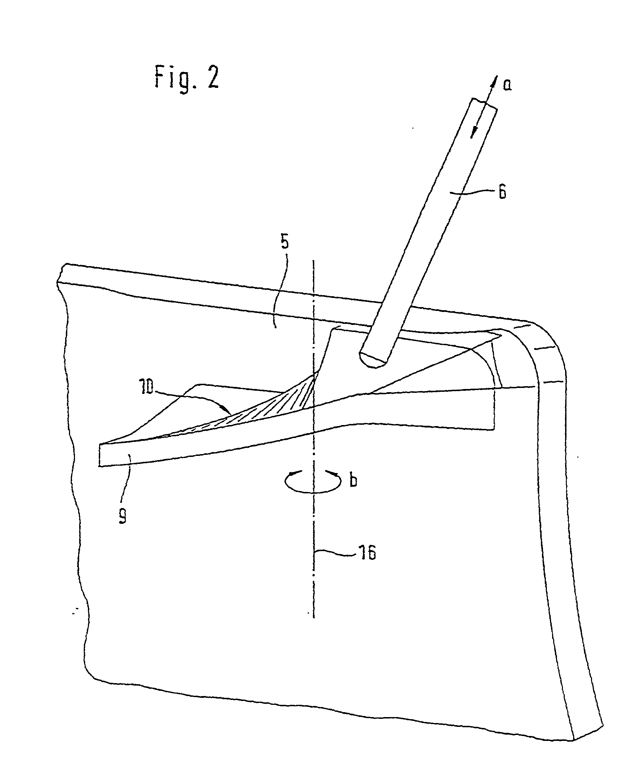

Entsprechend der Detailansicht in Fig. 2 ist die Kulisse 10 bezüglich der Schwenkachse 16 der Tankklappe 5 als schraubenförmige Fläche ausgebildet. Auf diese Weise bewirkt eine Schwenkverstellung der Tankklappe 5 um ihre Achse 16 entsprechend dem Doppelpfeil b eine Querverstellung der Kulisse 10 bezüglich dem Anschlagbolzen 6, wobei die axiale Stirnfläche des Anschlagbolzens 6 entlang der Kulisse 10 gleitet und eine Axialverstellung des Anschlagbolzens 6 entsprechend dem Doppelpfeil a verursacht. Die Kulisse 10 kann bei einer anderen Ausführungsform auch als schiefe Ebene ausgebildet sein, wodurch das Antriebsteil 9 preiswerter herstellbar ist. Um die Gleitbewegung zwischen der Kulisse 10 und der Stirnfläche des Anschlagbolzens 6 geräusch- und reibungsarm auszugestalten, kann z.B. das axiale Ende des Anschlagbolzens 6 mit einem Kunststoffüberzug und/oder die Kulisse 10 mit einer Kunststoff-Beschichtung oder -Folie versehen sein. Ebenso kann die Kulisse 10 und/oder der Anschlagbolzen 6 aus Kunststoff bestehen.

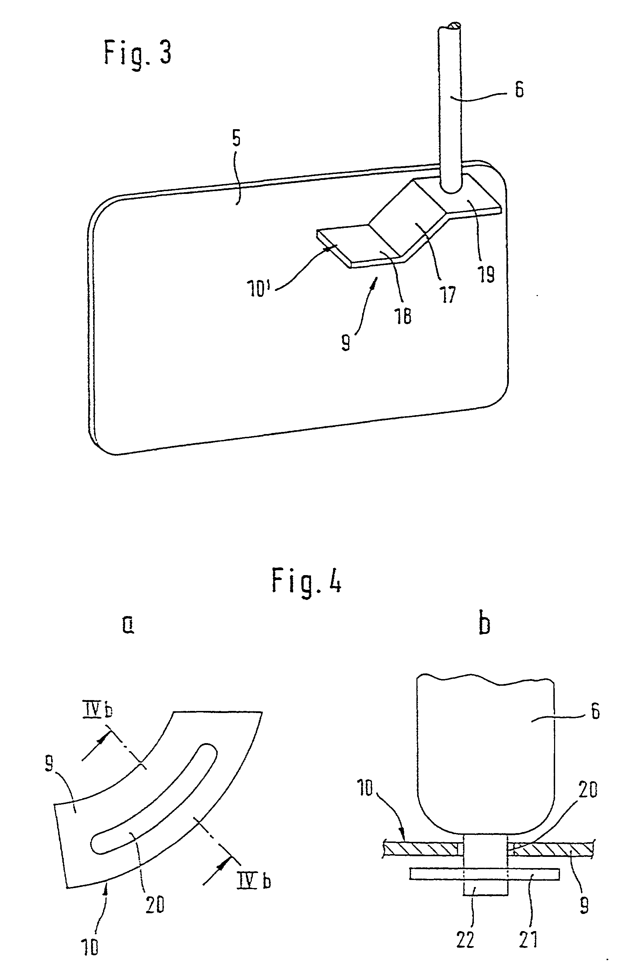

Beim Öffnen der Tankklappe 5 wird das dem Antriebsteil 9 zugeordnete axiale Ende des Anschlagbolzens 6 in Richtung auf die erste Öffnung 8 verdrängt. Gleichzeitig bewegt sich das gegenüberliegende axiale Ende des Anschlagbolzen 6 aus der zweiten Öffnung 11 hinaus und ragt entsprechend Fig. 3 in den Verstellweg des Trag- und Führungselementes 4 hinein. In dieser ersten Stellung des Anschlagbolzens 6 bildet das aus der zweiten Öffnung 11 herausragende axiale Ende des Anschlagbolzens 6 zusammen mit dem Trag- und Führungselement 4 einen Anschlag, der ein schädliches Öffnen der Schiebetüre verhindert.

Um Abnutzungserscheinungen sowohl am Anschlagbolzen 6 als auch am Trag- und Führungselement 4 zu verhindern, kann beispielsweise am Trag- und Führungselement 4 ein nicht dargestelltes Dämpfungs- und/oder Schutzelement angebracht sein.

Beim Schließen der Tankklappe 5 kann das dem Antriebsteil 9 zugeordnete axiale Ende des Anschlagbolzens 6 entlang der Kulisse 10 insbesondere nach unten zurückgleiten. Diese Rückstellbewegung des Anschlagbolzens 6 wird durch die Rückstellfeder 13 wirksam unterstützt. Spätestens bei geschlossener Tankklappe 5 erreicht der Anschlagbolzen 6 seine zweite Stellung, bei der er vorzugsweise im wesentlichen bündig mit der zweiten Öffnung 11 abschließt und eine freie Beweglichkeit des Trag- und Führungselementes 4 und somit der Schiebetüre entland der Schiene 3 gewährleistet.

Entsprechend Fig. 3 kann das Antriebsteil 9 auch mit einer Kulisse 10' ausgebildet sein, die aus drei Abschnitten besteht. Ein mittlerer Abschnitt 17 ist in Form einer schiefen Ebene ausgebildet und erfüllt im wesentlichen die Funktion der Kulisse 10 aus Fig. 2. Dieser mittlere Abschnitt 17 ist von zwei Endabschnitten 18 und 19 eingefaßt, wobei der vordere Endabschnitt 18 der zweiten Stellung des Anschlagbolzens 6 bei geschlossener Tankklappe 5 und der hintere Endabschnitt 19 der ersten Stellung bei geöffneter Tankklappe 5 zugeordnet ist. Die Endabschnitte 18 und 19 sind dabei als Ebenen ausgebildet, die senkrecht zur Schwenkachse 16 der Tankklappe 5 verlaufen. In diesen Bereichen kann eine Schwenkverstellung der Tankklappe 5 daher keine Längsverstellung des Anschlagbolzens 6 bewirken. Umgekehrt kann aber auch eine in Längsrichtung des Anschlagbolzens 6 auf die Kulisse 10' wirkende Kraft keine Schwenkverstellung der Tankklappe 5 bewirken, wodurch diese in ihren Endlagen gesichert ist. Ein derartiges, ungewolltes Schließen der Tankklappe 5 könnte beispielsweise durch zu große Rückstellkräfte des Anschlagbolzens 6 ausgelöst werden.

Bei einer anderen Ausführungsform des Antriebsteiles 9 kann dessen Kulisse 10 entsprechend den Fig. 4a und 4b mit einem Schlitz 20 versehen sein, durch den sich ein Fortsatz 22 des Anschlagbolzens 6 hindurch erstreckt. Dabei weist der Fortsatz 22 einen deutlich geringeren Querschnitt auf als der Anschlagbolzen 6, so daß dessen Führung entlang der Kulisse 10 ohne weiteres gewährleistet ist. Der sich koaxial zum Anschlagbolzen 6 durch den Schlitz 10 erstreckende Fortsatz 22 ist mit Hilfe einer Sicherungsscheibe 21 gesichert, so daß der Fortsatz 22 nicht aus dem Schlitz 20 herausgezogen werden kann. Diese Maßnahme bewirkt, daß der Anschlagbolzen 6 beim Schließen der Tankklappe 5 zwangsweise in seine zweite Stellung zurückgezogen wird.

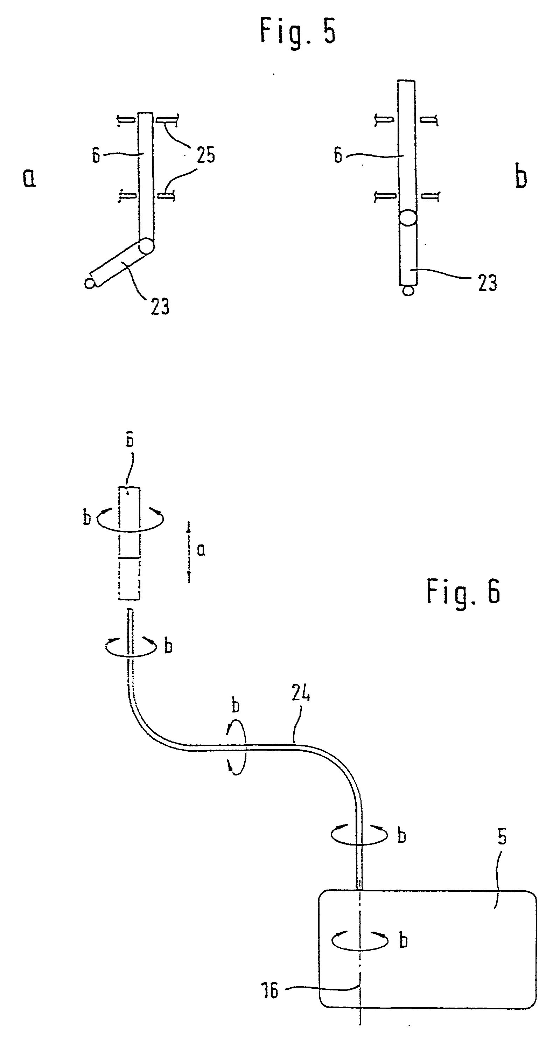

Entsprechend Fig. 5a und 5b kann die Axialverstellung des Anschlagbolzens 6 auch mit Hilfe eines Antriebsstabes 23 erreicht werden, der an einem axialen Ende mit der in diesen Prinzipskizzen nicht dargestellten Tankklappe 5 gelenkig verbunden und an seinem anderen axialen Ende an ein axiales Ende des Anschlagbolzens 6 gelenkig angeschlossen ist. Dabei ist in der zweiten Stellung des Anschlagbolzens 6 bei geschlossener Tankklappe (Fig. 5a) zwischen dem Antriebsstab 23 und dem Anschlagbolzen 6 ein stumpfer Winkel ausgebildet. Der Antriebsstab 23 ist derart an der Tankklappe 5 angeordnet, daß sich beim Öffnen der Tankklappe 5 der vorgenannte Winkel vergrößert. Dies hat eine Axialverstellung des Anschlagbolzens 6 zur Folge. Bei erreichen der ersten Stellung bei geöffneter Tankklappe 5 beträgt der Winkel mindestens 180° (Fig. 5b), wodurch sich vorzugsweise in einer Übertotpunktlage eine Sicherung des Anschlagbolzens in dieser Stellung ergibt. Um eine Axialverstellung des Anschlagbolzens 6 gewährleisten zu können, sind axiale Führungsmittel 25 vorgesehen.

Bei einer anderen Ausführungsform entsprechend Fig. 6 ist das Antriebsmittel in Form einer Antriebswelle 24 ausgebildet, die eine Drehbewegung der Tankklappe 5 auf den Anschlagbolzen 6 überträgt. Dazu ist die Antriebswelle 24 an einem Ende koaxial zur Schwenkachse 16 der Tankklappe 5 und am anderen Ende koaxial an einem axialen Ende des Anschlagbolzens 6 drehmomentübertragend befestigt. Die Antriebswelle 24 kann wie im gezeigten Beispiel biegsam ausgebildet sein, wobei sie entlang ihres Verlaufes in der Fahrzeugseitenwand an mehreren Stellen gelagert sein kann.

Um die auf den Anschlagbolzen 6 entsprechend den Doppelpfeilen b übertragenen Drehbewegungen in Axialverstellungen des Anschlagbolzens 6 entsprechend dem Doppelpfeil a umzusetzen, wirkt dieser mit nicht dargestellten Gewindemitteln zusammen. Beispielsweise können diese Gewindemittel aus einem Gewinde und aus damit in Wirkeingriff stehenden Stiften bestehen. Dabei weist z.B. der Anschlagbolzen 6 mehrere radial nach außen abstehende Stifte auf, die in ein ortsfestes, drehsicheres Innengewinde eingreifen, das eine relativ große Gewindesteigung aufweist.

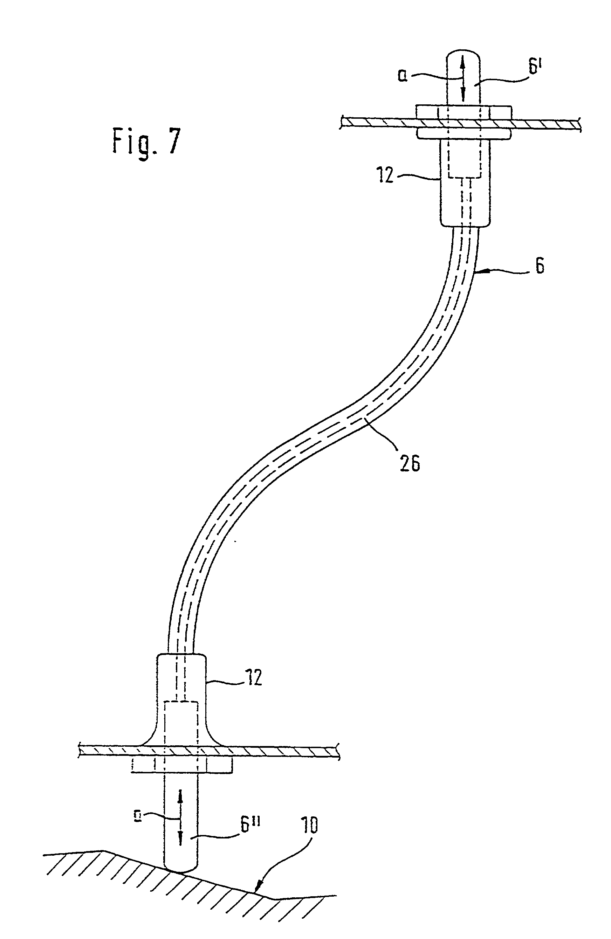

Entsprechend Fig. 7 kann der Anschlagbolzen 6 bei einer alternativen Ausführung aus zwei stabförmigen Anschlagelementen 6' und 6" bestehen, die durch die Buchsen 12 axial hindurch geführt und durch einen Bowdenzug 26 miteinander verbunden sind. Die Kulisse 10 bewirkt dabei eine Axialverstellung des damit zusammenwirkenden Anschlagelementes 6" entsprechend dem Doppelpfeil a. Diese Axialbewegung wird durch den Bowdenzug 26 auf das andere Anschlagelement 6' übertragen, wodurch dieses den eigentlichen Anschlag bilden kann. Die vorgeschlagene Ausgestaltung des Anschlagbolzens 6 ermöglicht eine Anordnung des den Anschlag bewirkenden Anschlagelementes 6' unabhängig von der Lage des mit den Antriebsmitteln, hier der Kulisse 10, zusammenwirkenden Anschlagelementes 6".

## Patentansprüche

1. Schiebetüranschlageinrichtung für ein Fahrzeug, mit einem Anschlagelement (6), das in der Nähe einer Türführungsschiene (3) für eine Fahrzeug-Schiebetüre (15) angebracht ist und in einer ersten Stellung die Bewegung der Schiebetür entlang der Schiene begrenzt und in einer zweiten Stellung die Begrenzung der Türbewegung längs der Schiene aufhebt, sowie mit Antriebsmitteln (9;23;24) die mit einer Fahrzeug-Tankklappe (5) zusammenwirken und das Anschlagelement in die erste Stellung antreiben, wenn die Tankklappe geöffnet wird, und in die zweite Stellung antreiben, wenn die Tankklappe geschlossen wird,
**dadurch gekennzeichnet,**
**daß** das Anschlagelement aus einem Anschlagbolzen (6) besteht, der in einer Fahrzeug-Seitenwand (1) axial beweglich geführt ist, und daß die Antriebsmittel (9;23;24) an der Innenseite der Tankklappe (5) angeordnet sind und bei einer Schwenkverstellung der Tankklappe (5) eine Axialverstellung an einem axialen des Anschlagbolzens (6) bewirken, wobei das andere axiale Ende des Anschlagbolzens (6) in der ersten Stellung unter Ausbildung eines Anschlages mit der Schiebetür (15) direkt oder mittelbar zusammenwirkt.

2. Schiebetüranschlageinrichtung nach Anspruch 1,
**dadurch gekennzeichnet,**
**daß** der Anschlagbolzen (6) in der ersten Stellung in den Verstellweg eines von der Schiene (3) geführten, an der Schiebetüre befestigten Trag- und Führungselementes (4) hineinragt und mit diesem unter Ausbildung des Anschlages zusammenwirkt.

3. Schiebetüranschlageinrichtung nach einem der vorhergehenden Ansprüche,
**dadurch gekennzeichnet,**
**daß** der Anschlagbolzen (6) derart in der Seitenwand (1) angeordnet ist, daß er in seiner ersten Stellung die Öffnungsbewegung der Schiebetüre (15) entlang der Schiene (3) bereits in deren Anfangsstadium begrenzt.

4. Schiebetüranschlageinrichtung nach einem der vorhergehenden Ansprüche,
**dadurch gekennzeichnet,**
**daß** der Anschlagbolzen (6) bei einem Fahrzeug mit mehreren Schienen derjenigen Schiene (3) zugeordnet ist, die bezüglich der Tankklappe (5) am nächsten angeordnet ist.

5. Schiebetüranschlageinrichtung nach einem der vorhergehenden Ansprüche,
**dadurch gekennzeichnet,**
**daß** am Anschlagbolzen (6) und/oder an dem damit in dessen ersten Stellung unter Ausbildung des Anschlages zusammenwirkenden Bestandteil (4) der Schiebetür (15) ein Dämpfungs- und Schutzteil angeordnet ist.

6. Schiebetüranschlageinrichtung nach einem der vorhergehenden Ansprüche,
**dadurch gekennzeichnet,**
**daß** die Antriebsmittel ein Antriebsteil (9) mit einer Kulisse (10) aufweisen, das an der Innenseite der Tankklappe (5) angeordnet ist und das über seine Kulisse (10) mit einem axialen Ende des Anschlagbolzens (6) zu dessen Axialverstellung zusammenwirkt, wobei das andere axiale Ende des Anschlagbolzens (6) in der ersten Stellung unter Ausbildung eines Anschlages mit der Schiebetür (15) direkt oder mittelbar zusammenwirkt.

7. Schiebetüranschlageinrichtung nach Anspruch 6,
**dadurch gekennzeichnet,**
**daß** sich der Anschlagbolzen (6) einenends durch eine erste Öffnung (8) in eine von der Tankklappe (5) verschließbare Tank-Mulde (7) und anderenends durch eine zweite Öffnung (11) in eine die Schiene (3) enthaltende Schienen-Mulde (2) erstreckt, wobei die erste und zweite Öffnung (8 und 11) eine Axialführung für den Anschlagbolzen (6) ausbilden.

8. Schiebetüranschlageinrichtung nach Anspruch 7,
**dadurch gekennzeichnet, daß** die erste und zweite Öffnung (8 und 11) jeweils mit einer vom Anschlagbolzen (6) durchdrungenen Gleit- und/oder Führungsbuchse (12) versehen sind.

9. Schiebetüranschlageinrichtung nach einem der Ansprüche 6 bis 8,
**dadurch gekennzeichnet,**
**daß** der Anschlagbolzen (6), während seiner Axialverstellung, mit einer axialen Stirnfläche entlang der Kulisse (10) des Antriebsteiles (9) gleitet.

10. Schiebetüranschlageinrichtung nach einem der Ansprüche 6 bis 9,
**dadurch gekennzeichnet,**
**daß** die Kulisse (10) mit Bezug auf eine Parallele zur Längsachse des Anschlagbolzens (6) als schraubenförmige Fläche oder schiefe Ebene ausgebildet ist.

11. Schiebetüranschlageinrichtung nach Anspruch 10,
**dadurch gekennzeichnet,**
**daß** die Kulisse (10) mit einem kreisbogenförmigen Schlitz (20) versehen ist, durch den sich ein im Durchmesser reduzierter, axialer Fortsatz (22) des Anschlagbolzens (6) hindurcherstreckt und mit Sicherungsmitteln (21) gegen Herausziehen aus dem Schlitz (20) gesichert ist, wobei der Anschlagbolzen (6) während Schwenkbewegungen der Tankklappe (5) im Schlitz (20) geführt verstellbar ist.

12. Schiebetüranschlageinrichtung nach Anspruch 10,
**dadurch gekennzeichnet,**
**daß** eine als schiefe Ebene ausgebildete Kulisse (10') beiderseits von einem ebenen Endabschnitt (18 und 19) begrenzt ist, dessen Ebene jeweils senkrecht zur Schwenkachse (16) der Tankklappe (5) verläuft.

13. Schiebetüranschlageinrichtung nach einem der vorhergehenden Ansprüchen,
**dadurch gekennzeichnet,**
**daß** der Anschlagbolzen (6) an seinen Enden jeweils aus einem stabförmigen Anschlagelement (6' und 6") besteht, die durch einen Bowdenzug (26) miteinander verbunden sind.

14. Schiebetüranschlageinrichtung nach einem der Ansprüche 1 bis 5,
**dadurch gekennzeichnet,**
**daß** die Antriebsmittel einen Antriebsstab (23) aufweisen, der einenends an der Innenseite der Tankklappe (5) und anderenends an einem axialen Ende des Anschlagbolzens (6) angelenkt ist, wobei zwischen Anschlagbolzen (6) und Antriebsstab (23) ein stumpfer Winkel ausgebildet ist, der sich beim Öffnen der Tankklappe (5) vergrößert.

15. Schiebetüranschlageinrichtung nach einem der vorhergehenden Ansprüche,
**dadurch gekennzeichnet,**
**daß** die Antriebsmittel wenigstens eine Rückstellfeder (13) aufweisen, die mit dem Anschlagbolzen (6) zusammenwirkt und diesen in dessen zweite Stellung vorspannt.

16. Schiebetüranschlageinrichtung nach Anspruch 15,
**dadurch gekennzeichnet,**
**daß** die Rückstellfeder als Schraubendruckfeder (13) ausgebildet ist und sich zwischen einem am Anschlagbolzen (6) befestigten, radial abstehenden Kragen (14) und dem Randbereich der ersten oder zweiten Öffnung (8 und 11) abstützt.

17. Schiebetüranschlageinrichtung nach einem der Ansprüche 1 bis 5,
**dadurch gekennzeichnet,**
**daß** die Antriebsmittel eine Antriebswelle (24) aufweisen, die einenends etwa koaxial zur Schwenkachse (16) der Tankklappe (5) an dieser und anderenends koaxial zur Längsachse des Anschlagbolzens (6) an diesem drehmomentübertragend befestigt ist, wobei der Anschlagbolzen (6) mit einer Gewindeführung zusammenwirkt, die bei einer Verdrehung durch die Antriebswelle (24) eine entsprechende Axialverstellung des Anschlagbolzens (6) bewirkt.

18. Schiebetüranschlageinrichtung nach Anspruch 17,
**dadurch gekennzeichnet,**
**daß** die Antriebswelle (24) biegsam ausgebildet ist.

## Claims

1. Sliding door stop-device (6) for a vehicle, with a stop element that is applied close to a door guide rail (3) for a sliding door (11) of a vehicle and which limits, in a first position, the movement of the sliding door along the rail and, in a second position, lifts the limitation of the door movement along the rail, and with driving means (9; 23, 24) that function in conjunction with a vehicle tank cover (5) and drive the stop element into its first position, if the tank cover is open, and drive the stop element into its second position if the tank cover is closed,
**characterized in that**
the stop element comprises a stop pin (6) that is axially guided in the vehicle side wall (1), and that the drive means (9; 23; 24) is disposed on the inside of the tank cover (5) and, in the case of a swivelling displacement of the tank cover (5), brings about an axial movement on one axial line of the stop pin (6), whereby the other axial line of the stop pin (6) acts directly or indirectly in conjunction with the sliding door (15).

2. Sliding door stop-device in accordance with claim 1,
**characterized in that**,
in a first position, the stop pin (6) projects into the line of movement of a support and guide element (4) that is guided by the rail (3) and that is attached to the sliding door, and **in that** the stop pin (6) functions together with this support and guide element (4) forming a stop with it.

3. Sliding door stop-device in accordance with any one of the preceding claims,
**characterized in that**
the stop pin (6) is disposed in the side wall (1) such that, in its first position, it already limits the opening movement, in its initial stage, of the sliding doors (15) along the rail (3).

4. Sliding door stop-device in accordance with one of the preceding claims ,
**characterized in that**,
in a vehicle with several rails, the stop pin (6) is associated with that rail (3) that is closest to the tank cover (5).

5. Sliding door stop-device in accordance with one of the preceding claims
**characterized in that**
a damping and protection piece is disposed on the stop pin (6) and/or on the component (4) of the sliding door (15) that, in its first position, works together with the stop pin (6) to form a stop.

6. Sliding door stop-device in accordance with one of the preceding claims,
**characterized in that**
the drive means has a drive piece (9), with a slot link (10), that is disposed on the inner side of the tank cover (5) and that, by means of its slot link (10), functions together with an axial end of the stop pin (6) for its axial movement, whereby the other axial end of the stop pin (6) functions, in the first position, directly or indirectly together with the sliding door (15), with formation of a stop.

7. Sliding-door stop-device in accordance with claim 6,
**characterized in that**
the stop pin (6) extends, at one end, through a first opening (8) into a tank hollow (7) that can be closed by the tank cover (5) and, at the other end, extends through a second opening (11) into a rail trough (2) that contains the rail (3), whereby the first and second openings (8 and 11) form an axial guide for the stop pin (6).

8. Sliding-door stop-device in accordance with claim 7,
**characterized in that**
the first and second openings (8 and 11) are in each case provided with a sliding and/or guide sleeve that has a stop pin (6) that passes through it.

9. Sliding-door stop-device in accordance with one of claims 6 to 8,
**characterized in that**
the stop pin (6), in its axial movement, slides with an axial, end face along the slot link (10) of the drive piece (9).

10. Sliding-door stop-device in accordance with one of claim 6 to 9,
**characterized in that**
the slot link (10), in relation to a line running parallel to the lengthwise axis of the stop pin (6), is developed as a helical surface or a sloping plane.

11. Sliding-door stop-device in accordance with claim 10,
**characterized in that**
the slot link (10) is provided with an arched slot (20) through which an axial projection (22), of the stop pin (6), which has a reduced diameter, extends, the said projection (22) being secured against being drawn out of the slot (20) by securing means (21), whereby the stop pin (6) can be displaced, guided, in the slot (20), during swivelling movement of the tank cover (5).

12. Sliding-door stop-device in accordance with claim 10,
**characterized in that**
a slot link (10'), formed as an inclined plane, is bordered on both sides by a flat end section (18 and 19), the plane of which in each case runs vertically in relation to the swivelling axis (16) of the tank cover (5).

13. Sliding-door stop-device in accordance with one of the foregoing claims,
**characterized in that**
the stop pin (6) in each case comprises, at its ends, a rod-form stop element (6' and 6"), these ends being connected, in each case, by a Bowden cable (26).

14. Sliding-door stop-device in accordance with one of claims 1 to 5,
**characterized in that**
the drive means have a drive rod (23) that, at one end, is pivoted on the inner side of the tank cover (5) and, at the other end, is pivoted on an axial end of the stop pin (6), whereby an obtuse angle, that increases with the opening of the tank cover (5), is developed between the stop pin (6) and the drive rod (23).

15. Sliding-door stop-device in accordance with one of the foregoing claims,
**characterized in that**
the drive means have at least one return spring (13) that functions in conjunction with the stop pin (6) and pre-stresses it in its second position.

16. Sliding-door stop-device in accordance with claim 15,
**characterized in that**
the return spring is developed as a compression spring (13) and is supported between a radially projecting collar (14) attached to the stop pin (6), and the rim area of the first or second opening (8 and 11).

17. Sliding-door stop-device in accordance with one of claims 1 to 5,
**characterized in that**,
the drive means has a drive shaft (24) that is attached, transmitting torque, at one end to the drive shaft approximately coaxially in relation to the axis of swivelling (16) of the tank cover (5), and, at the other end, is attached coaxially to the longitudinal axis of the stop pin (6), whereby the stop pin (6) functions in conjunction with a thread guide that causes a corresponding axial movement of the stop pin (6) when there is rotation by means of the drive shaft (24).

18. Sliding-door stop-device
**characterized in that**
the drive shaft (24) is developed such that it is flexible.

## Revendications

1. Dispositif de butée pour porte coulissante pour un véhicule, avec un élément de butée (6), qui est monté à proximité d'une glissière de guidage de porte (3), pour une porte coulissante pour véhicule et, en une première position, limite le déplacement de la porte coulissante le long de la glissière et, en une deuxième position, fait cesser la limitation du déplacement de porte le long de la glissière, ainsi qu'avec des moyens d'entraînement (9; 23 ; 24), coopérant avec un volet de réservoir de véhicule (5) et entraînant l'élément de butée en une première position, lorsque le volet de réservoir est ouvert, et l'entraînant en une deuxième position, lorsque le volet de réservoir est fermé,
**caractérisé en ce que**
l'élément de butée formé d'un boulon formant butée (6), guidé de façon mobile axialement dans une paroi latérale de véhicule (1), et **en ce que** les moyens d'entraînement (9; 23; 24) sont disposés sur la face intérieure du volet de réservoir (5) et, en cas de mouvement pivotant du volet de réservoir (5), provoquent un déplacement axial selon l'axe du boulon formant butée (6), l'autre extrémité axiale, l'autre extrémité axiale du boulon formant butée (6), à la première position, coopérant directement ou indirectement avec la porte coulissante (15) avec création d'une butée.

2. Dispositif de butée pour porte coulissante selon la revendication 1, **caractérisé en ce que**, à la première position, le boulon formant butée (6) pénètre dans la trajectoire de déplacement d'un élément support et de guidage (4) guidé par la glissière (3), fixée sur la porte coulissante, et coopère avec celui-ci en formant la butée.

3. Dispositif de butée pour porte coulissante selon l'une quelconque des revendications précédentes, **caractérisé en ce que** le boulon formant butée (6) est disposé dans la paroi latérale (1), de manière que, à sa première position, il limite le déplacement d'ouverture de la porte coulissante (15) le long de la glissière (3), déjà à son stade initial.

4. Dispositif de butée pour porte coulissante selon l'une quelconque des revendications précédentes, **caractérisé en ce que**, dans le cas d'un véhicule ayant plusieurs glissières, le boulon formant butée (6) est associé à la glissière (3) disposée le plus près du volet de réservoir (5).

5. Dispositif de butée pour porte coulissante selon l'une quelconque des revendications précédentes, **caractérisé en ce que**, sur le boulon formant butée (6) et/ou sur le composant (4), coopérant avec lui à sa première position en formant la butée, de la porte coulissante (15) est monté un élément d'amortissement et de protection.

6. Dispositif de butée pour porte coulissante selon l'une quelconque des revendications précédentes, **caractérisé en ce que** les moyens d'entraînement présentent une partie d'entraînement (9) ayant une coulisse (10), partie d'entraînement disposée sur la face intérieure du volet de réservoir (5) et coopérant, par l'intermédiaire de sa coulisse (10), avec une extrémité axiale du boulon formant butée (6) pour assurer son déplacement axial, l'autre extrémité axiale du boulon formant butée (6), à la première position, coopérant, directement ou indirectement, avec la porte coulissante (15) en formant une butée.

7. Dispositif de butée pour porte coulissante selon la revendication 6, **caractérisé en ce que** le boulon formant butée (6), à une extrémité, s'étend, à travers une première ouverture (8), dans une auge de réservoir (7) pouvant être fermée par le volet de réservoir (5) et, à l'autre extrémité, à travers une deuxième ouverture (11) dans une auge de glissière (2) contenant la glissière (3), la première et la deuxième ouvertures (8 et 11) formant un guidage axial pour le boulon formant butée (6).

8. Dispositif de butée pour porte coulissante selon la revendication 7, **caractérisé en ce que** la première et la deuxième ouvertures (8 et 11) sont chacune munies d'une douille de glissement et/ou de guidage (12), traversée par le boulon formant butée (6).

9. Dispositif de butée pour porte coulissante selon l'une des revendications 6 à 8, **caractérisé en ce que**, pendant son déplacement axial, le boulon formant butée (6) glisse, par une face frontale axiale, le long de la coulisse (10) de la partie d'entraînement (9).

10. Dispositif de butée pour porte coulissante selon l'une des revendications 6 à 9, **caractérisé en ce que** la coulisse (10) est réalisée sous forme de surface en forme d'hélice ou de plan incliné, sur une parallèle à l'axe longitudinal du boulon formant butée (6).

11. Dispositif de butée pour porte coulissante selon la revendication 10, **caractérisé en ce que** la coulisse (10) est munie d'une fente (20) en forme d'arc de cercle, à travers laquelle s'étend un prolongement (22) axial, de diamètre réduit, du boulon formant butée (6) et est fixée avec des moyens de sécurité (21) empêchant toute extraction hors de la fente (20), le boulon formant butée (6) étant réglable de façon guidée dans la fente (20) pendant les mouvements pivotants du volet de réservoir (5).

12. Dispositif de butée pour porte coulissante selon la revendication 10, **caractérisé en ce qu'**une coulisse (10'), réalisée sous la forme de plan oblique, est limitée de part et d'autre par un tronçon d'extrémité (18 et 19) plan, dont le plan s'étend chaque fois perpendiculairement à l'axe de pivotement (16) du volet de réservoir (5).

13. Dispositif de butée pour porte coulissante selon l'une des revendications précédentes, **caractérisé en ce que** le boulon formant butée (6) est formé à chacune de ses extrémités d'un élément de butée (6' et 6") en forme de barre, les éléments étant reliés ensemble par un câble de Bowden (26),

14. Dispositif de butée pour porte coulissante selon l'une des revendications 1 à 5, **caractérisé en ce que** les moyens d'entraînement présentent une barre d'entraînement (23) articulée, à une extrémité, sur la face intérieure du volet de réservoir (5) et, à l'autre extrémité, sur une extrémité axiale du boulon formant butée (6), entre le boulon formant butée (6) et la barre d'entraînement (23) étant formé un angle obtus allant en augmentant lors de l'ouverture du volet de réservoir (5).

15. Dispositif de butée pour porte coulissante selon l'une des revendications précédentes, **caractérisé en ce que** les moyens d'entraînement présentent au moins un ressort de rappel (13) coopérant avec le boulon formant butée (6) et pré-contraignant celui-ci à sa deuxième position.

16. Dispositif de butée pour porte coulissante selon la revendication 15, **caractérisé en ce que** le ressort de rappel est réalisé sous la forme de ressort de compression hélicoïdal (13) et prenant appui entre une collerette (14) en saillie radialement, fixée sur le boulon formant butée (6), et sur la zone de bordure de la première ou de la deuxième ouvertures (8 et 11).

17. Dispositif de butée pour porte coulissante selon l'une des revendications 1 à 5, **caractérisé en ce que** les moyens d'entraînement présentent un arbre d'entraînement (24) fixé, à une extrémité, à peu près coaxialement à l'axe de pivotement (16) du volet de réservoir (5) sur celui-ci et, à l'autre extrémité, coaxialement par rapport à l'axe longitudinal du boulon formant butée (6) en assurant une transmission de couple sur celui-ci, le boulon formant butée (6) coopérant avec un guidage fileté qui, en cas de rotation du fait de l'arbre d'entraînement (24), provoque un réglage axial correspondant du boulon formant butée (6).

18. Dispositif de butée pour porte coulissante selon la revendication 17, **caractérisé en ce que** l'arbre d'entraînement (24) est flexible.
